# EUROPEAN PATENT SPECIFICATION

(11) **EP 0 937 636 B1**
(45) Date of publication and mention of the grant of the patent: **06.05.2004**
(21) Application number: 99100292.4
(22) Date of filing: 09.01.1999
(51) Int. Cl.: B62K 11/10, B62K 25/28

(54) **A unit swing-type motorcycle engine supporting structure**
Eine Stützstruktur für einen schwingbar gelagerten Motor eines Motorrades
Une structure pour supporter un motor oscillant de motorcyclette

(30) Priority: 13.01.1998 JP 458498
(43) Date of publication of application: 25.08.1999
(73) Proprietor: SUZUKI MOTOR CORPORATION, Shizuoka-ken (JP)
(72) Inventor: Ishii, Keiichiroh, Hamamatsu-shi, Shizuoka-ken (JP); Shibuya, Izumi, Shizuoka-ken (JP)
(74) Representative: Luderschmidt, Schüler & Partner GbR

(56) References cited:
- US-A- 3 907 332
- US-A- 4 579 189
- US-A- 4 650 025

## Description

### BACKGROUND OF THE INVENTION

### (1) Field of the Invention

The present invention relates to a supporting structure which can suspend a unit swing type motorcycle engine for use in scooter type vehicles and the like so that the engine can swing together with the rear wheel with respect to the vehicle frame.

### (2) Description of the Prior Art

As is well known, a typical scooter type vehicle uses a so-called unit swing-type motorcycle engine (which will be merely called 'unit swing engine', hereinbelow), that is, an engine which is integrated with a power transmission device for transmitting the driving force from the engine to the rear wheel into a unit, in a manner that permits swingable suspension of the unit together with the rear wheel. However, in the unit swing engine, vibrations upon swinging, other vibrations of the engine and other elements are readily transmitted to the rider, so this needs to be prevented.

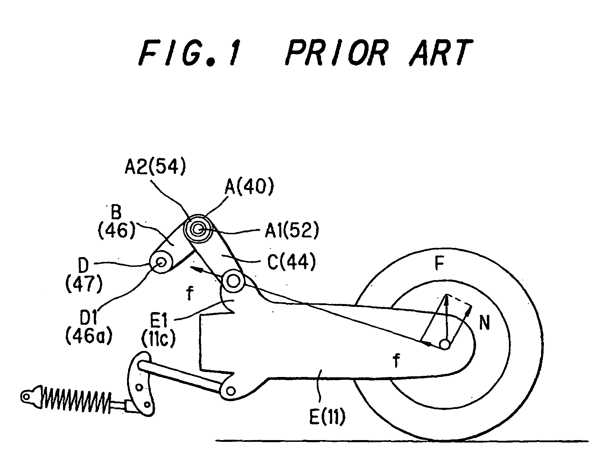

In particular, in a large scooter having an engine of a 250 cc, 400 cc displacement or the like, a vibration damping engine supporting structure as shown in Fig.1 is provided in order to inhibit each element from vibrating. In this figure, the numerals within the parentheses designate the elements corresponding to those in the embodiment of the invention to be referred to hereinbelow.

In this engine supporting structure, a cylindrical vehicle suspending portion A is axially supported at a supporting shaft A1 and has two arms B and C projected therefrom in different directions. A unit swing engine E is attached swingably to engine side arm C, which projects toward the engine. Arm B projected forward is axially fixed to the vehicle frame (not shown) and its axial fixture D1 is elastically supported via a stopper D made up of an elastic material such as rubber or the like. Provided and fixed around supporting shaft A1 which is fitted into vehicle suspending portion A is a bush A2 made up of elastic material such as rubber or the like. This bush A2 is secured to supporting shaft A1 and vehicle suspending portion A. Accordingly, this vehicle suspending portion A is elastically supported by the frame by means of supporting shaft A1 and A2.

In this way, in accordance with the conventional unit swing-type motorcycle engine supporting structure, vibrations arising from the engine etc. are damped by the elastic forces from bush A2 and stopper D to thereby keep a beneficial riding performance.

However, the above conventional unit swing-type motorcycle engine supporting structure will produce large elastic deformation at bush A2 and/or stopper D during high speed driving to cause a torsion to occur in the alignment of the front and rear wheels, which produces the problem of a lack of driving stability in controlling the handlebars when the vehicle is steered left and right.

The unit swing-type motorcycle engine supporting structure as discussed above is disclosed in the Japanese patent application laid-open Sho 62 No. 160977.

US-A-4,650,025 describes a unit swing-type motorcycle engine supporting structure comprising the vehicle suspending bracket composed of a front arm and a rear arm. The front arm is pivotally supported on the seat post by a pivot shaft, the rear arm is pivotally supported on the power unit by a pivot shaft and pivotally connected to the front arm by a pivot shaft. The pivot shafts are fitted with rubber blocks for resiliently suppressing the vibrations.

A suspension system for a conventional type motorcycle engine is disclosed in US-A-3,907,332. The suspension system comprises a vehicle suspending bracket composed of a cylindrical vehicle suspending portion supported on a predetermined supporting shaft by the vehicle frame.

### SUMMARY OF THE INVENTION

The present invention has been devised in view of the above problems of the prior art and it is therefore an object of the present invention to provide a unit swing-type motorcycle engine supporting structure whereby no unnecessary torsion will arise in the vehicle body even when the steering is switched back during high speed driving, and the front and rear wheels can be continuously kept in proper alignment while beneficial vibration damping effects can be obtained.

According to the invention, the above object is solved with the features of claim 1. A preferred embodiment of the invention is the subject matter of claim 2.

According to the above configurations of the invention, since bearings are provided together with fixing bushes between the vehicle suspending portion and its supporting shaft fitted therethrough, these bearings effectively keep the positional relationship between the supporting shaft and the vehicle suspending portion constant with respect to the diametric direction of the supporting shaft. Thus it is possible to prevent the occurrence of torsion or other deformations with respect to this direction in the vehicle body. Though the stoppers receive forces from the unit swing engine by way of both arms and the vehicle suspending portion, the forces are distributed as forces in the peripheral directions of the bushes fitted on the supporting shaft. As a result, the stoppers will not deform and will not be compressed greatly. By this configuration, the stoppers and bushes can be continuously kept elastically deformable. Thus, the elastic deformation of these elements can produce a beneficial vibration damping effect.

### BRIEF DESCRIPTION OF THE DRAWINGS

Fig.1 is an illustrative side view showing the suspended state of a conventional unit swing-type motorcycle engine;
Fig. 2 is a side view showing the schematic configuration of a motorcycle to which the embodiment of the present invention is applied;
Fig.3 is an exploded perspective view showing the vehicle frame, etc., of the motorcycle shown in Fig.2;
Fig.4 is a plan view showing an engine casing bracket as the vehicle suspending assembly shown in Fig.3;
Fig.5 is a side view of that shown in Fig.4;
Fig.6 is a rear view of that shown in Fig.5; and
Fig.7 is a partial cutaway plan view showing a state where bearings and bushes are attached to that shown in Fig.6.

### DESCRIPTION OF THE PREFERRED EMBODIMENTS

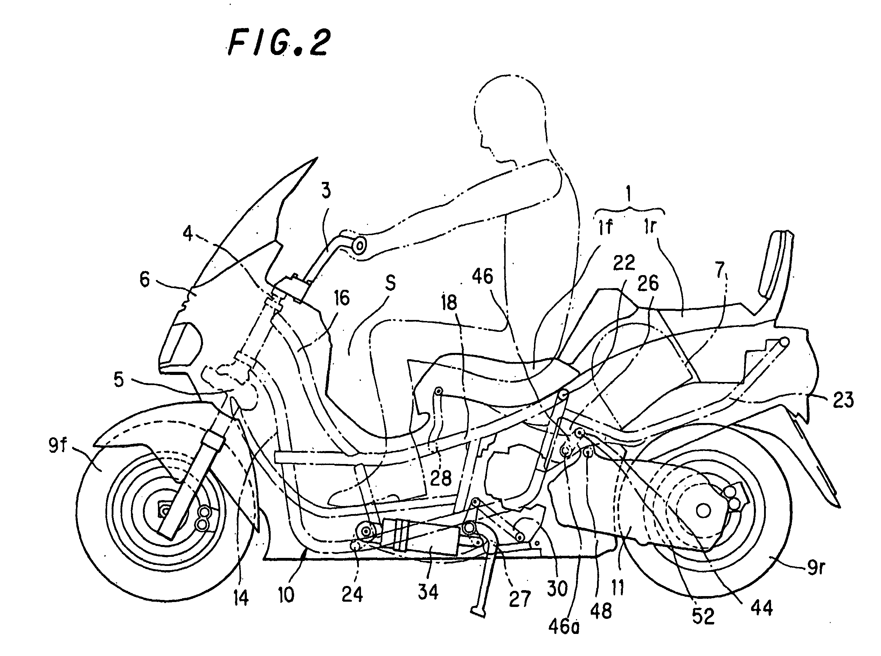

The embodiment of the invention will hereinafter be described in detail with reference to Figs.2 through 8.

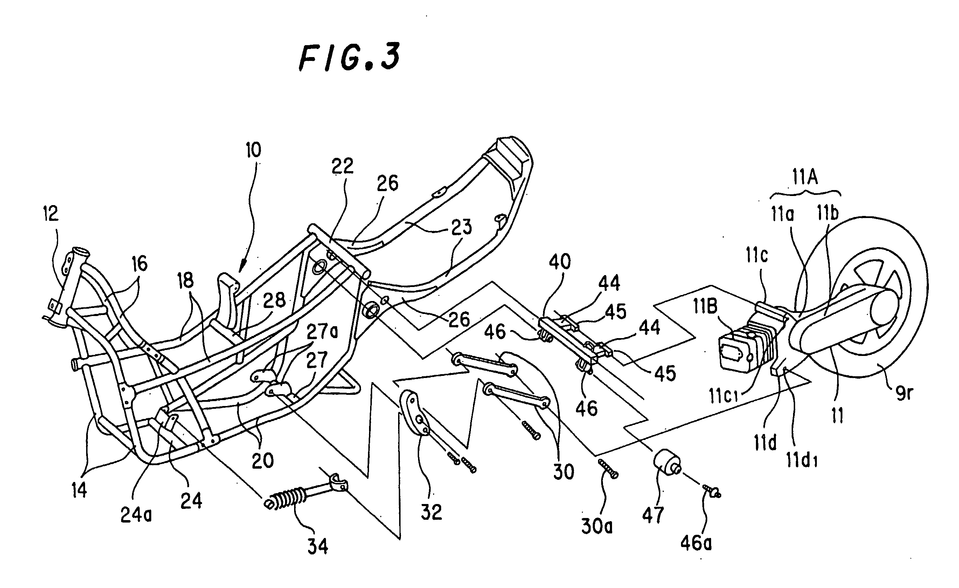

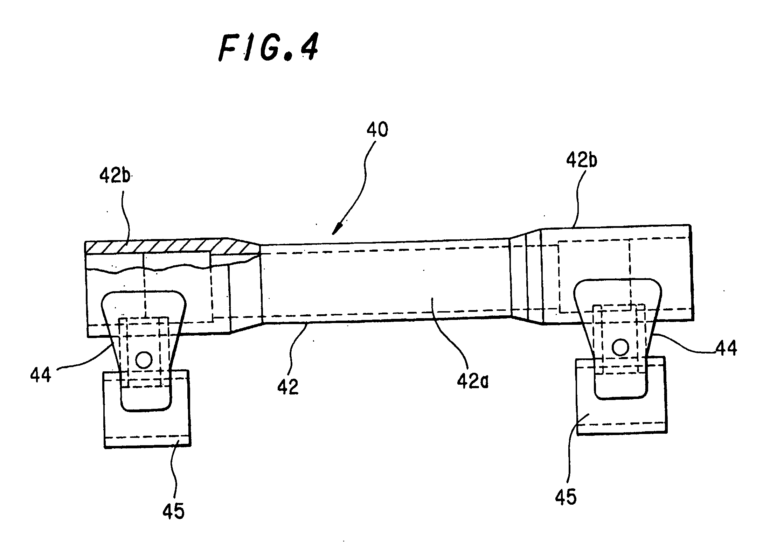

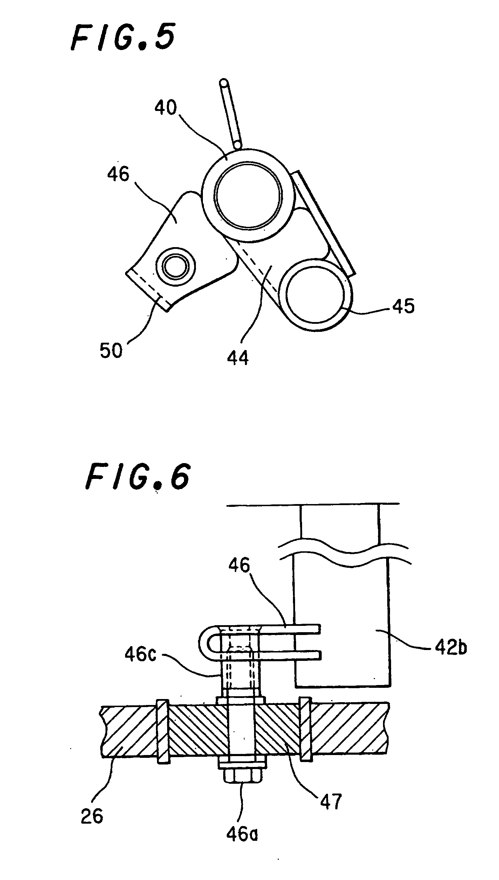

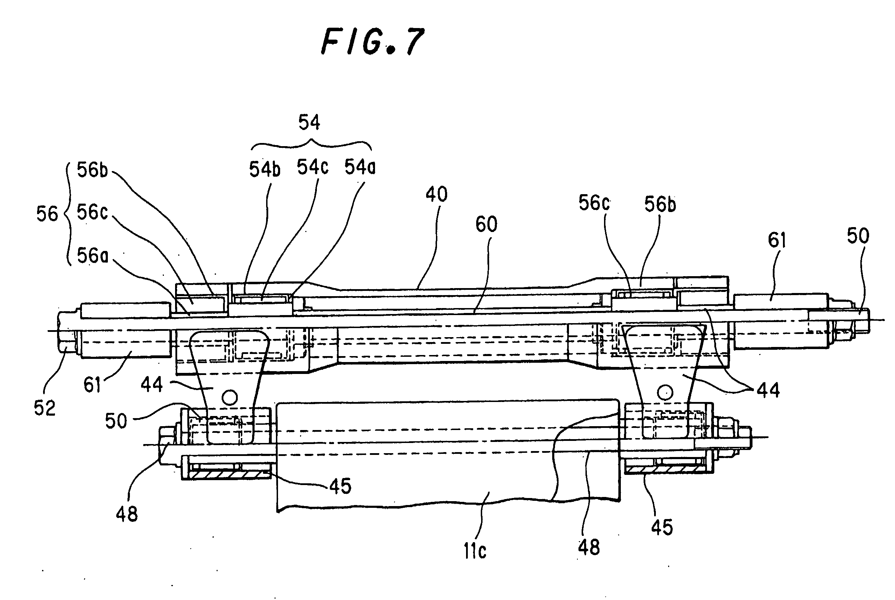

Fig. 2 is a side view showing the schematic configuration of a motorcycle to which the embodiment of the present invention is applied. Fig. 3 is an exploded perspective view showing the vehicle frame and the like of the motorcycle shown in Fig.2. Fig.4 is a plan view showing an engine casing bracket as the vehicle suspending assembly shown in Fig.3. Fig.5 is a side view of that shown in Fig.4. Fig. 6 is a rear view of that shown in Fig. 5. Fig.7 is a partial cutaway plan view showing a state where an axial shaft, bearings and bushes are attached to that shown in Fig.6.

Referring to Fig.2, the motorcycle to which this embodiment is applied, is a scooter type vehicle and has a seat 1 and a steering device 3 in a geometry that provides a relatively large leg space S which is open therebetween to the left and right. The motorcycle further includes: a front cowl 6 attached in the front side of leg space S as the outer shell of the vehicle front for covering a steering stem 4 and a front fork bracket 5. Provided on the rear side of the vehicle are a storage box 7 for storing a helmet etc. and a unit swing engine 11 which swings together with a rear wheel 9r. This scooter type vehicle is of a large, two-seater type vehicle having a seat portion 1 composed of a front seat 1f and a rear seat 1r with a displacement of 250 cc, 400 cc, or the like.

The frame, designated at 10, of this large scooter type vehicle is that shown in Fig.3.

Detailedly, provided at the front part of frame 10 is a head pipe 12 supporting a steering stem 4 (see Fig.1) in a rotatable manner. A pair of left and right down tubes 14 are joined at the front part (lower part) of this head pipe 12 so as to be extended downwards while another pair of left and right down tubes 16 are jointed at the rear part (upper part) of head pipe 12 in a similar manner. Front-side down tubes 14 are bent rearwards at their lower portions so as to be connected to respective lower portions of rear-side down tubes 16 by means of connecting elements. Joined to the mid part of each front-side down tube 14 is an upper tube 18 by a connecting element while the rear end of each down tube 14 is connected to a respective main frame 20 by a connecting element of the same type. The rear ends of main frames 20 and upper tubes 18 are joined by a bridge 22. Other than this, bridges 24, 28 and 27 are provided so as to connect the left down tube 14 with the right one, the left upper tube 18 with the right one and the left main frame 20 with the right one, respectively. Provided in the rear of main frames 20 are a pair of seat rails 23 each curving in a U-shape with a supporting plate 26 fixed between the front part of seat rail 23 and the rear part of main frame 20.

With frame 10 thus configured, a unit swing engine is swingably supported to the frame by a supporting structure as follows.

This unit swing engine 11 integrally accommodates a power transmission device which rotatably supports a rear wheel 9r and transmits the driving force from engine 11 to rear wheel 9r, within a casing 11 A of an engine case 11a and a clutch cover 11b etc., and also has a cylinder head 11B projected from the front part of casing 11A. Formed on the upper side of engine case 11a is a front upper-side projection 11C projected in the front upper direction while a lower-side projection 11d projected in the front lower direction is formed on the underside of engine case 11a. These projections 11C and 11d have respective axial fitting holes 11C1 and 11d1 which are bored in the direction of the vehicle width.

Lower-side projection 11d is coupled with a rear cushioning unit 34 by rods 30 and a lever 32. Illustratively, a pair of left and right rods 30 are rotatably coupled at their one end to lower-side projection 11d with an axle 30a fitted to fitting hole 11d1. The other ends of the two rods 30 are axially fitted to one end of lever 32 which is axially supported at its mid part by a bracket 27a of bridge 27. The other end of lever 32 is axially coupled to rear cushioning unit 34 which is axially held at the other end by a bracket 24a of bridge 24.

Upper-side projection 11C projected on the upper side of engine case 11a is rotatably held by a vehicle suspending bracket 40 which is axially supported by left and right supporting plates 26.

More specifically, as shown in Figs. 4 through 7, vehicle suspending bracket 40 comprises: a bracket portion, i.e., a cylindrical vehicle suspending portion 42; a pair of rear arms (engine-side arms) 44 provided at two, opposite, left and right sites of vehicle suspending portion 42; and a pair of front arms (stopper-side arms) 46 projected at two, opposite, left and right sites of vehicle suspending portion 42. A cylindrical part 45 is welded to each rear arm 44. Upper-side projection 11C of engine case 11a is arranged between these cylindrical parts 45 while an axial bolt 48 is fitted from one cylindrical part 45 to the other, penetrating through fitting hole 11C1 of upper-side projection 11C, so that engine case 11a is rotatably supported about axial bolt (axle element) 48. Here, a needle bearing 50 is provided between each cylindrical part 45 and axial bolt 48, to thereby ensure smooth rotation of axial bolt 48.

The aforementioned engine suspending bracket 40 is rotatably supported by supporting plates 26 by means of supporting shaft 52 which is threaded at one end thereof.

Vehicle suspending portion 42 of vehicle suspending bracket 40 is greater in outer and inner diameter at both left and right ends 42b than at the central part 42a, and the wall thickness of left and right ends 42b is formed thicker so as to enhance the strength. A needle bearing 54 and a bush 56 are fitted at either end 42b with bush 56 fixed outside of needle bearing 54. At either end, the outer sleeve 54b of needle bearing 54 is fitted and fixed on the interior surface of end portion 42b, and needle rollers 54c of needle bearing 54 are arranged in uniform contact with a spacer 54a which is fixed to the outer surface of supporting shaft 52.

Each bush 56 comprises: an outer sleeve 56b of a cylinder fitted and fixed to the interior surface of end portion 42b of vehicle suspending portion 42; an inner sleeve 56a of a cylinder fixed to supporting shaft 52; and an annular elastic element 56c of rubber etc., provided between outer sleeve 56b and inner sleeve 56a. Elastic element 56c is fitted with its outer peripheral surface fixed to the interior surface of outer sleeve 56b and its inner peripheral surface fixed to inner sleeve 56a. Outer sleeve 56b of bush 56 is fitted and fixed to the inner peripheral surface of vehicle suspending portion 42 while inner sleeve 56a is fitted and fixed on the outer peripheral surface of supporting shaft 52.

Here, designated at 60 and 61 are spacers for limiting the positions of bearings 50 and bushes 56 on supporting shaft 52 with respect to the direction of the vehicle width.

Each front arm 46 is formed of a plate element curved in a U-shape, as shown in Fig.6, and is fixed to supporting plate 26 by means of a bolt 46a and a stopper 47. Specifically, stopper 47 is formed of an elastic material such as rubber or the like and is squeezed into an opening 26a formed in supporting plate 26. This stopper is fastened by fitting the bolt through a passage hole formed in the center thereof and screwing it into a female-threaded portion 46c held by each front arm 46.
As above, in this embodiment, upper-side projection 11C of unit swing engine 11 is swayably supported via vehicle suspending bracket 40 while lower-side projection 11d is elastically supported by front arms 46 with the help of cushioning unit 34 etc.

Thus, unit swing engine 11 can move up and down together with rear wheel 9r in conformity with irregularities of the road surface so as to reduce the up and down movement of the motorcycle body.

Further, only needle bearings 50 and 54 are provided between upper-side projection 11C and axial bolt 48 with no elastic element, and also needle bearings 54 are disposed between vehicle suspending bracket 40 and supporting shaft 52. Accordingly, even if a crosswise stress acts on axial bolt 48 and supporting shaft 52 when steering device 3 is turned right and left, the presence of needle bearings 50 and 54 keeps the positional relationship between vehicle suspending bracket 40 and supporting shaft 52 and the positional relationship between axial bolt 48 and rear arm 44 constant, with respect to their diametric directions. Thereby, it is possible to prevent the vehicle body from twisting or deforming in a crosswise direction. As a result, front wheel 9f and rear wheel 9r can be continuously kept in proper alignment, to secure a beneficial driving stability.

If relatively small vibrations arising from the piston action of unit swing engine 11 and the like are directly transferred to the frame, they will give uncomfortable sensation to the rider. In accordance with this embodiment, since, in addition to rubber stoppers 47, bushes 56 are provided in vehicle suspending bracket 40, the vibration can be absorbed and damped by the elastic actions of the two.

Illustratively, in the conventional case shown in Fig.1 where stopper D is the only elastic material, suppose the rear wheel receives a force F from the road surface, its component f produces torque with respect to supporting shaft A1. Therefore, a large force acts on stopper D in the approximately diametric direction thereof so that stopper D will be greatly compressed lowering its elasticity so as to be practically a solid body. As a result, in the conventional configuration, the vibrations arising from unit swing engine E tend to be transferred to the frame and other parts of the vehicle through the stopper D thus solidified or reduced in elasticity, producing the problem of making the rider feel uneasy.

However, in accordance with this embodiment, since bushes 56 and bearings 54 are provided within vehicle suspending bracket 40, the torque produced by force component f is distributed by stoppers 47 and bushes 56 of vehicle suspending portion 42, as indicated in Fig.1 by the numerals in the parentheses. Accordingly, the deformation of stoppers 47 can be reduced and the solidification of stoppers 47 can be avoided so that the stoppers can keep a high enough elasticity. Accordingly, it is possible to markedly reduce the transfer of micro-vibrations arising from unit swing engine 11 to the vehicle body, to thereby provide a comfortable riding sensation.

Thus, at first view, the engine suspended state of the embodiment of the invention externally looks the same as that shown in Fig.1, but the invention is essentially different from the conventional engine suspending means shown in Fig. 1, in respect of having bushes 56 and bearings 54 within bracket 40.

It is also possible to change the positional relationship between the ball bearing and the bush in the engine suspending bracket, in contrast to the above configuration, by laying out the bush on the inner side and the ball bearing on the outer side.

As has been described heretofore, in accordance with the unit swing type motorcycle engine supporting structure or the present invention, bearings are provided between the vehicle suspending portion and the supporting shaft which is fitted therethrough so that the vehicle suspending portion can be supported rotationally about the supporting shaft while bushes which are made up of a cylindrical elastic element, fitted and fixed on the supporting shaft fitted through the vehicle suspending portion, and fixed to the interior surface of the vehicle suspending portion are also provided. As a result, the vehicle body will not deform unnecessarily even when the steering is switched back during high speed driving to thereby continuously provide a proper aliment between the front and rear wheels.

Further, although a thrust force acts on the stopper from the unit swing engine via the vehicle suspending portion, this thrust force will be suspended and disturbed as force components in the peripheral direction of the bushes provided for the supporting shaft. Therefore, the stopper will not deform and will not be compressed greatly. Resultantly, the stopper and the bushes can be continuously maintained in a elastically deformable state so that a beneficial vibration damping effect can be obtained by the elastic deformation of these elements.

## Claims

1. A unit swing-type motorcycle engine supporting structure which supports a unit swing-type motorcycle engine which rotatably supports the rear wheel (9r) and integrally holds an engine (11) with a power transmission device for transmitting the driving force from the engine to the rear wheel and comprises a vehicle suspending bracket (40) composed of a cylindrical vehicle suspending portion (42) pivotally supported on a predetermined supporting shaft (52) by the vehicle frame (10) stopper-side arms (46) and engine-side arms (44) are provided to project from the vehicle suspending portion in different positions, wherein the front part of the unit swing-type motorcycle engine is adapted to be supported by the engine-side arms so as to rotate and sway about the supporting shaft, comprising:
elastic stoppers (47) for supporting the stopper-side arms (46) at their one side on the vehicle frame;
bushes (56) of a cylindrical elastic element, fixed on the supporting shaft (52), fitted through the vehicle suspending portion (42) and also fixed to the interior of the vehicle suspending portion, wherein each bush (56) is composed of an inner sleeve (56a), an outer sleeve (56b) opposing the inner sleeve and an annular elastic element (56c) fixed to the outer peripheral surface of the inner sleeve and the inner peripheral surface of the outer sleeve;
**characterized in that**
bearings (54) are provided between the vehicle suspending portion (42) and the supporting shaft (52) fitted therethrough so as to rotatably support the vehicle suspending portion about the supporting shaft;
the interior surface of the inner sleeve (56a) being fitted and fixed to the peripheral surface of the supporting shaft (52) and the outer sleeve (56b) being fitted and fixed on the inner surface of the vehicle suspending portion (42);
the bearings (54) being of a needle bearing, and being arranged to be usable together with the bushes.

2. The unit swing-type motorcycle engine supporting structure according to claim 1, wherein each bush (56) is disposed at positions on the supporting shaft (52) outer than the corresponding bearing (50).

## Patentansprüche

1. Stützstruktur für einen schwingbar gelagerten Motor eines Motorrads, die einen schwingbar gelagerten Motor eines Motorrads trägt, die das Hinterrad (9a) drehbar trägt und einen Motor (11) mit einer Kraftübertragungsvorrichtung zum Übertragen der Antriebskraft von dem Motor zu dem Hinterrad selbsttragend hält und einen Fahrzeugaufhängebügel (40) umfasst, der aus einem zylinderförmigen Fahrzeugaufhängungsabschnitt (42) zusammengesetzt ist, der schwenkbar an einer vorbestimmten Tragwelle (52) von dem Fahrzeugrahmen (10) getragen wird, wobei Anschlagseitenarme (46) und Motorseitenarme (44) bereitgestellt werden, um von dem Fahrzeugaufhängungsabschnitt in unterschiedlichen Positionen hervorzustehen, wobei das Vorderteil des schwingbar gelagerten Motors eines Motorrads angepasst ist, um von den Motorseitenarmen getragen zu werden, um sich um die Tragwelle zu drehen und um diese zu pendeln, mit:
elastischen Anschlägen (47) zum Tragen der Anschlagseitenarme (46) an ihrer einen Seite auf dem Fahrzeugrahmen;
Buchsen (56) aus einem zylindrischen elastischen Element, die an der Tragwelle (52) befestigt sind, durch den Fahrzeugaufhängungsabschnitt (42) gepasst werden und ebenfalls an dem Inneren des Fahrzeugaufhängungsabschnitt befestigt sind, wobei jede Buchse (56) aus einer inneren Hülse (56a), einer äußeren Hülse (56b), die der inneren Hülse gegenüberliegt, und einem ringförmigen elastischen Element (56c), das an der äußeren Umfangsoberfläche der inneren Hülse und der inneren Umfangsoberfläche der äußeren Hülse befestigt ist, zusammengesetzt ist;
**dadurch gekennzeichnet, dass**
Lager (54) zwischen den Fahrzeugaufhängungsabschnitt (42) und der Tragwelle (52) bereitgestellt werden, die dadurch eingesetzt ist, um den Fahrzeugaufhängungsabschnitt um die Tragwelle drehbar zu tragen;
die Innenoberfläche der inneren Hülse (56a) an die Umfangsoberfläche der Tragwelle (52) und die äußere Hülse (56b) an der Innenoberfläche des Fahrzeugaufhängungsabschnitts (42) angepasst und befestigt ist;
die Lager (54) aus einem Nagellager sind und angeordnet sind, um zusammen mit den Buchsen verwendbar zu sein.

2. Stützstruktur für einen schwingbar gelagerten Motor eines Motorrads gemäß Anspruch 1, wobei jede Buchse (56) an Positionen an der Tragwelle (52) angeordnet ist, die äußerer als das entsprechende Lager (50) sind.

## Revendications

1. Structure de support pour un moteur de motocyclette du type oscillant, qui supporte un moteur de motocyclette du type oscillant qui supporte en rotation la roue arrière (9r) et qui maintient de façon intégrale un moteur (11) avec un dispositif de transmission de puissance pour transmettre la force motrice depuis le moteur à la roue arrière et qui comprend une platine de suspension (40) de véhicule composée d'une partie de suspension de véhicule cylindrique (42) supportée en pivotement sur un arbre de support prédéterminé (52) par le châssis du véhicule (10), des bras latéraux d'arrêt (46) et des bras latéraux de moteur (44) étant prévus en projection depuis la partie de suspension de véhicule dans des positions différentes, dans laquelle la partie frontale du moteur de motocyclette du type oscillant est adaptée à être supportée par les bras latéraux de moteur de manière à tourner et à osciller autour de la roue de support, comprenant :
des arrêts élastiques (47) pour supporter les bras latéraux d'arrêt (46) sur l'un de leurs côtés sur le châssis de véhicule ;
des douilles (56) d'un élément cylindrique élastique, fixées sur l'arbre de support (52), engagé à travers la partie de suspension du véhicule (42), et également fixées à l'intérieur de la partie de suspension de véhicule, dans lesquelles chaque douille (56) se compose d'un manchon intérieur (56a), d'un manchon extérieur (56b) à l'opposé du manchon intérieur, et d'un élément élastique annulaire (56c) fixé sur la surface périphérique extérieure du manchon intérieur et sur la surface périphérique intérieure du manchon extérieur ;
**caractérisée en ce que** :
des paliers (54) sont prévus entre la partie de suspension de véhicule (42) et l'arbre de support (52) engagé à travers celle-ci de manière à supporter en rotation la partie de suspension de véhicule autour de l'arbre de support ;
la surface intérieure du manchon intérieur (56a) est engagée et fixée sur la surface périphérique de l'arbre de support (52), et le manchon extérieur (56b) est engagé et fixé sur la surface intérieure de la partie de suspension de véhicule (42) ;
les paliers (54) sont des paliers à aiguilles, et sont agencés de façon à être utilisables conjointement avec les douilles.

2. Structure de support pour moteur de motocyclette du type oscillant, selon la revendication 1, dans laquelle chaque douille (56) est disposée à des positions sur l'arbre de support (52) plus extérieures que le palier correspondant (50).
